# EUROPÄISCHE PATENTANMELDUNG

(11) **EP 0 590 229 A2**
(43) Veröffentlichungstag der Anmeldung: **06.04.1994**
(21) Anmeldenummer: 93103918.4
(22) Anmeldetag: 11.03.1993
(51) Int. Cl.: H04B 7/26, H04Q 7/04

(54) **Steuergerät für Funkanlagen**

(30) Priorität: 28.09.1992 DE 4232294
(71) Anmelder: STN Systemtechnik Nord GmbH, D-28012 Bremen (DE)
(72) Erfinder: Andres, Peter, W-2000 Hamburg 13 (DE); Bartels, Heinrich, W-2080 Pinneberg (DE); Ehrke, Karl-Christian, W-2200 Elmshorn (DE)
(74) Vertreter: Eisenführ, Speiser & Partner

(57) **Zusammenfassung**

Die Erfindung betrifft ein Steuergerät für Funkanlagen, insbesondere für den Einsatz im erdgebundenen Seefunkverkehr. Das Besondere der Erfindung besteht darin, daß einer Funkanlage (1) eine Steuereinrichtung (6, 12) vorgeschaltet ist, die aus einem gespeicherten Verzeichnis von Funkstellen und den von diesen benutzten Frequenzen unter Berücksichtigung des eingegebenen geographischen Standortes und der Uhrzeit eine geeignete Frequenz für eine gewünschte Funkverbindung zu einem anzurufenden Teilnehmer ermittelt und die Funkanlage (1) so ansteuert, daß von dieser die gewünschte Funkverbindung mit der ermittelten Frequenz selbsttätig aufgebaut wird.

## Beschreibung

Die Erfindung betrifft ein Steuergerät für Funkanlagen, insbesondere für den Einsatz im erdgebundenen Seefunkverkehr.

Mit den angesprochenen Funkanlagen, die auf beliebigen Trägern wie insbesondere Wasserfahrzeugen o.dgl. verwendbar sind, können Verbindungen mit einem anderen Teilnehmer bzw. einer anderen Funkstelle entweder direkt oder über eine amtliche Funkstelle wie z.B. eine Küstenfunkstelle hergestellt und abgewickelt werden. Eine Abwicklung über eine amtliche Funkstelle ist im allgemeinen dann erforderlich, wenn ein an einem Land-Telefonnetz angeschlossener Teilnehmer angerufen werden soll, wobei die amtliche Funkstelle als Schnittstelle dient. In diesem Fall erfolgt die Abwicklung der Verbindung im Regelfall über einen Operator der amtlichen Funkstelle. In einigen Staaten kann aber auch die Verbindung zu einem an einem Telefonnetz angeschlossenen Teilnehmer über bestimmte amtliche Funkstellen ohne Operator automatisch aufgrund einer entsprechend vorgesehenen Durchwahlmöglichkeit abgewickelt werden.

Die Herstellung derartiger Funkverbindungen ist jedoch relativ kompliziert. Insbesondere muß für eine erfolgreiche und korrekte Abwicklung des Funkverkehrs der richtige Funkweg ausgewählt werden, wozu die Berücksichtigung bestimmter Kriterien notwendig ist. Deshalb ist zur Einstellung der Funkanlagen und zum Aufbau der Verbindungen im allgemeinen ein Funker erforderlich, der die notwendige Fachkenntnis besitzt und aus mitgeführten Handbüchern die notwendigen Informationen insbesondere für den Aufbau der Verbindungen entnimmt. Die Einstellung der Funkanlage und der Aufbau der Verbindungen wird dann von Hand vorgenommen.

Aus den vorgenannten Gründen besteht insbesondere in der Schiffahrt die Vorschrift, daß ein entsprechend ausgebildeter Funker an Bord mitzuführen ist. Mit der international vereinbarten Einführung eines neuen Seenotrufsystems auf digitaler Basis bis 1999 wird jedoch die Pflicht zur Mitnahme eines Funkers an Bord entfallen. Die oben genannten Aufgaben werden jedoch bestehen bleiben. Sie müssen dann von anderen Besatzungsmitgliedern übernommen werden. Diese sind jedoch im allgemeinen mit den Erfordernissen zur Abwicklung der gewünschten Funkverbindung nicht vertraut und häufig überfordert. Insbesondere bei Schiffen mit der sogenannten Einmannbrücke erscheint es daher nahezu ausgeschlossen, daß der Steuermann neben seiner Hauptaufgabe auch noch die zuvor genannten Tätigkeiten übernehmen kann.

Der Erfindung liegt daher die Aufgabe zugrunde, ein Steuergerät für Funkanlagen zu schaffen, mit dessen Hilfe eine gewünschte Funkverbindung ohne Unterstützung durch einen Funker aufgebaut werden kann.

Diese Aufgabe wird gelöst durch eine einer Funkanlage vorgeschaltete Steuereinrichtung, die aus einem gespeicherten Verzeichnis von Funkstellen und den von diesen benutzten Frequenzen unter Berücksichtigung des eingegebenen geographischen Standortes und der Uhrzeit eine geeignete Frequenz für eine gewünschte Funkverbindung zu einem anzurufenden Teilnehmer ermittelt und die Funkanlage so ansteuert, daS von dieser die gewünschte Funkverbindung mit der ermittelten Frequenz selbsttätig aufgebaut wird.

Die mit der Erfindung erzielten Vorteile bestehen insbesondere darin, daß nun auch ein ungeübter Bediener in der Lage ist, eine Funkverbindung sicher aufzubauen, da das erfindungsgemäße Steuergerät einen selbsttätigen Verbindungsaufbau für eine korrekte Abwicklung des Funkverkehrs mit anderen Funkstellen übernimmt und durchführt. Die Mitnahme eines Funkers wird durch die Erfindung überflüssig, so daß auch die diesbezüglich bisher angefallenen Personalkosten entfallen. Außerdem brauchen bei Verwendung des erfindungsgemäßen Steuergerätes auch keine Ersatzmaßnahmen bei Ausfall des Funkers (z.B. wegen Schlaf oder Krankheit) getroffen zu werden. Deshalb wird mit Hilfe der Erfindung auch eine deutliche Erhöhung der Sicherheit insbesondere an Bord von Schiffen erzielt. Ferner wird der ungeübte Bediener darin unterstützt, die kostengünstigeren erdgebundenen Funkwege für die Kommunikation zu nutzen und nicht auf die zwar einfacher aufzubauenden, jedoch wesentlicher teureren Satellitenverbindungen auszuweichen, was zu einer spürbaren Senkung der Kommunikationskosten führt.

Die vorgenannten Vorteile werden erfindungsgemäß dadurch erreicht, daß die Steuereinrichtung aus einem gespeicherten Verzeichnis von Funkstellen und den von diesen benutzten Frequenzen unter Berücksichtigung der eingegebenen geographischen Position und der Uhrzeit eine geeignete Frequenz ermittelt und somit für die gewünschte Verbindung die Auswahl des richtigen Funkweges und der richtigen Frequenz insbesondere abhängig von der zu überbrückenden Distanz und von den Wachzeiten und Frequenzplänen der Küstenfunkstellen trifft und dann die Funkanlage entsprechend steuert.

Vorzugsweise ermittelt die Steuereinrichtung eine geeignete Frequenz für eine im wesentlichen optimale Übertragungsqualität der gewünschten Funkverbindung, wenn mehrere Kanäle bzw. Frequenzen zur Verfügung stehen.

Zur Ermittlung der Uhrzeit kann die Steuereinrichtung eine Uhr enthalten. Alternativ ist es auch möglich, daß die Steuereinrichtung die Uhrzeit von einer externen Uhr empfängt.

Zur Optimierung der Auswahl des richtigen Funkweges insbesondere hinsichtlich der Übertragungsqualität kann die Steuereinrichtung vorzugsweise die geeignete Frequenz für die gewünschte Verbindung zusätzlich in Abhängigkeit von gespeicherten Sonnenfleckenindexwerten (Funkwetterdaten) ermitteln.

Insbesondere bei Verwendung der Erfindung auf Seefunkstellen handelt es sich bei dem abgespeicherten Verzeichnis von Funkstellen um ein Verzeichnis von amtlichen Funkstellen, insbesondere Küstenfunkstellen.

Zusätzlich kann das gespeicherte Verzeichnis Angaben zum Signalisiermodus der angegebenen Funkstellen enthalten und die Steuereinrichtung unter Berücksichtigung von diesen Angaben die Funkanlage über ein Signalisiergerät ansteuern. Dies ist insbesondere bei der Abwicklung des Funkverkehrs mit Hilfe eines Selektivrufes von Vorteil.

Ferner kann eine Bedieneinrichtung zur Eingabe des anzurufenden Teilnehmers und zur Aktivierung der Steuereinrichtung an diese angeschlossen sein. Ebenfalls kann an die Steuereinrichtung auch eine Anzeigeeinrichtung angeschlossen sein, über die von der Steuereinrichtung relevante Informationen über die Abwicklung der Funkverbindung angezeigt werden. Diese Informationen können beispielsweise die Nummer des anzurufenden Teilnehmers, die gewählte Frequenz, die angerufene Funkstelle und auch die Angabe sein, ob das Gespräch über einen Operator bei der Funkstelle handvermittelt wird oder eine automatische Durchwahl erfolgt. Vorzugsweise ist zur Vereinfachung der Konstruktion die Anzeigeeinrichtung in der Bedieneinrichtung enthalten.

Bei einer gegenwärtig besonders bevorzugten Ausführung sind die Steuereinrichtung und die Bedieneinrichtung mittels Modems über eine vorhandene Telefonleitung miteinander verbunden. Diese Ausführung ist insbesondere für eine Verwendung an Bord eines Schiffes interessant, da dort vorhandene Telefonnetze unter Zwischenschaltung der bordeigenen Nebenstellenanlage genutzt werden können. Zweckmäßigerweise kann in einem solchen Fall die Bedieneinrichtung in einem Telefonapparat enthalten sein. Die Eingaben in die Bedieneinrichtung können vorteilhaft als Tonwahlzeichen über die Telefonleitung an die Steuereinrichtung übertragen werden. Die Rückmeldungen der Steuereinrichtung an den Bediener, die in der Anzeigeeinrichtung dargestellt werden, werden mit Hilfe der Modemstrecke übertragen, die dem Sprechweg auf der Telefonleitung überlagert wird.

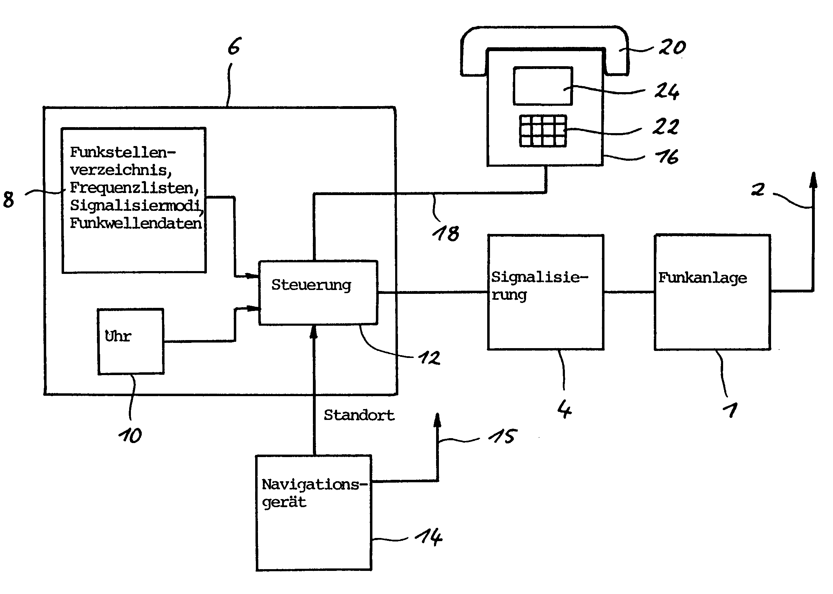

Nachfolgend wird ein bevorzugtes Ausführungsbeispiel der Erfindung anhand der beiliegenden Zeichnung näher erläutert, in der ein Blockschaltbild einer Gesamtanlage, bestehend aus einer Funkanlage, einem Signalisiergerät, einem Steuergerät, einem Navigationsgerät und einem Bediengerät, dargestellt ist.

Bei der nachfolgend beschriebenen Funkstelle handelt es sich um eine Seefunkstelle, die an Bord von Schiffen installiert ist.

Die mit 1 bezeichnete Funkanlage zur Abwicklung von Funkverbindungen, welche von konventioneller Art sein kann, ist ausgangsseitig an eine Antenne 2 und eingangsseitig über eine Signalisierungseinrichtung 4 an ein Steuergerät 6 angeschlossen. Die Signalisiereinrichtung 4 kann als separates der Funkanlage 1 vorgeschaltetes Gerät, wie in der beiliegenden Figur gezeigt ist, oder alternativ auch als Teil der Funkanlage 1 ausgebildet sein und dient zur Erkennung der Funkstelle durch andere Funkstellen, insbesondere durch Küstenfunkstellen. Insbesondere dient die Signalisierungseinrichtung 4 dazu, bei Absetzen von Funksprüchen den zugehörigen Selektivruf zu erzeugen und bei Empfang von Funksprüchen die ggf. zusätzlich gesendeten Selektivrufe zu unterscheiden.

Das Steuergerät 6 enthält einen Speicher 8, in dem nach Art einer Datenbank ein Verzeichnis der Küstenfunkstellen, die von diesen benutzten Frequenzen und ggf. weitere Informationen hinsichtlich der Küstenfunkstellen sowie Funkwetterdaten, insbesondere sonnenwindindexwerte, und ggf. weitere Daten abgespeichert sind. Diese im Speicher 8 abgespeicherten Informationen und Daten werden im allgemeinen regelmäßig durch entsprechende Up-Dates erneuert. Ferner enthält das Steuergerät 6 eine Uhr 10, die die aktuelle Uhrzeit erzeugt.

Außerdem weist das Steuergerät 6 eine Steuereinrichtung 12 auf, die vorzugsweise einen Mikrocomputer enthält und die den Speicher 8 und die Uhr 10 abfragt. Außerdem ist an die Steuereinrichtung 12 ein externes Navigationsgerät angeschlossen, das beispielsweise nach dem Decca- oder GPS-System über seine Antenne 15 entsprechende Daten zur Standortbestimmung empfängt und den daraus ermittelten geographischen Standort an die Steuereinrichtung 12 übermittelt.

Für eine gewünschte Funkverbindung ist die Auswahl des richtigen Funkweges, der richtigen Frequenz und der richtigen Anrufsignalisierung insbesondere abhängig von dem geographischen Standort und der zum Teilnehmer zu überbrückenden Distanz, von den Wachzeiten und Frequenzplänen der Küstenfunkstellen und von der technischen Ausstattung der Küstenfunkstellen. Die Steuereinrichtung 12 des Steuergerätes 6 ist nun in der Lage, die korrekte Auswahl zu treffen. Hierzu ermittelt sie aus dem im Speicher 8 abgespeicherten Funkstellenverzeichnis und den im Speicher 8 abgespeicherten Frequenzlisten unter Berücksichtigung des vom Navigationsgerät 14 bestimmten und übermittelten geographischen Standort, der von der Uhr 10 gemessenen aktuellen Uhrzeit und der im Speicher 8 abgespeicherten Funkwetterdaten eine geeignete Frequenz für eine im wesentlichen optimale Übertragungsqualität einer gewünschten Funkverbindung sowie ggf. weitere relevante Daten wie z.B. im Bedarfsfalle die erforderliche Signalisierung. Mit diesen Daten steuert das Steuergerät 6 dann über die Signalisiereinrichtung 4 die Funkanlage 1 an, so daß diese die gewünschte Funkverbindung selbsttätig aufbaut.

Zur Aktivierung des Steuergerätes 6 und zur Eingabe des Verbindungswunsches ist ein Bediengerät 16 an das Steuergerät 6 angeschlossen, wobei in der dargestellten Ausführung die Steuereinrichtung 12 des Steuergerätes 6 und das Bediengerät 16 mittels nicht näher dargestellter Modems über eine vorhandene Telefonleitung 18 miteinander verbunden sind. Bei dem Bediengerät 16 handelt es sich im wesentlichen um einen Telefonapparat mit einem Hörer 20, einer Tastatur 22 und einer Anzeige 24. Das Steuergerät 6 wird vom Bediengerät 16 aktiviert, sobald der Bediener den Hörer 20 abhebt und seinen Verbindungswunsch über die Tastatur 22 eingibt. Dabei wird der Bediener über entsprechende Texte auf der Anzeige 24 während der gesamten Abwicklung der Funkverbindung geführt.

Da als Verbindungsleitung zwischen dem Bediengerät 16 und dem Steuergerät 6, wie bereits erwähnt, eine Telefonleitung 18 verwendet werden kann, können vorhandene Telefonnetze an Bord unter Zwischenschaltung von bordeigenen Nebenstellenanlagen genutzt werden. Deshalb können die Tastatureingaben des Bedieners als Tonwahlzeichen auf der Telefonleitung 18 übertragen werden. Rückmeldungen von der Steuereinrichtung 12 des Steuergerätes 6 an den Bediener, welche in der Anzeige 24 dargestellt werden, werden mit Hilfe der Modemstrecke übertragen, die dem Sprechweg auf der Telefonleitung 18 überlagert ist.

Ferner kann ein nicht dargestellter Gebührenzähler vorgesehen sein, mit dem die Gesprächsdauer verfolgt und im Anschluß an das Gespräch für eine mögliche spätere automatische Abrechnung gespeichert werden kann. Die aktuelle Gesprächsdauer und die bereits verbrauchten Gebühren können ebenfalls auf der Anzeige 24 des Bediengerätes 16 angezeigt werden.

Das Steuergerät 6 ermöglicht insbesondere neben der automatischen Durchwahl in ein Landtelefonnetz auch die manuelle Durchwahl über einen Operator bei der zuständigen Küstenfunkstelle, die Verbindung zu sonstigen Funkstellen, insbesondere zu anderen Schiffen, die Bearbeitung von digitalen Selektivrufen (DSC-Rufen), die GMDSS-Notrufbearbeitung und den Zugang zu Schiffsdiensten wie Radar, Schleuse, Hafenmeister und Lotse.

Am Beispiel einer manuellen Durchwahl über Kurzwelle sollen die Funktionen des Steuergerätes 6 näher erläutert werden.

Für eine Durchwahlverbindung mit einem Landteilnehmer gibt der Bediener nach dem Abheben des Hörers 20 lediglich die gewünschte Telefonnummer über die Tastatur 22 des Bediengerätes 6 ein. Über die Anzeige 24 erhält er dabei Hinweise zum jeweils nächsten Bedienschritt.

Anhand der Telefonnummer ermittelt die Steuereinrichtung 12 des Steuergerätes 6 mit Hilfe des im Speicher 8 abgespeicherten Funkstellenverzeichnisses unter Berücksichtigung des vom Navigationsgerät 14 eingebenen geographischen Standortes des Schiffes die nächstgelegene Küstenfunkstelle zum Landteilnehmer. Ferner berechnet die Steuereinrichtung 12 anhand des eingegebenen geographischen Standortes des Schiffes und der von der Uhr 10 gemessenen aktuellen Uhrzeit sowie der im Speicher 8 gespeicherten Funkwetterdaten den optimalen Funkweg zu dieser Küstenfunkstelle. Aus der im Speicher 8 gespeicherten Frequenzliste der ausgewählten Küstenfunkstelle entnimmt die Steuereinrichtung 12 die richtigen Frequenzen für den ermittelten Funkweg und übergibt diese mit Hilfe der Signalisiereinrichtung 4 an die Funkanlage 1. Bei Bedarf erteilt die Steuereinrichtung 12 der Signalisiereinrichtung 4 Aufträge zur Abgabe der erforderlichen Signalisierung abhängig von den im Speicher 8 ebenfalls gespeicherten Informationen zur technischen Ausstattung der gewählten Küstenfunkstelle.

Die für die gewünschte Funkverbindung zuständige Küstenfunkstelle kann nun gerufen werden. Nach Herstellung der Funkverbindung mit der Küstenfunkstelle wird dem dortigen Operator die gewünschte Nummer mitgeteilt, und die Verbindung wird zum gewünschten Teilnehmer durchgeschaltet.

Ergänzend sei noch angemerkt, daß das beschriebene Steuergerät zum selbsttätigen Verbindungsaufbau in jeder beliebigen Funkstelle eingesetzt werden kann, so z.B. auch an Bord von Flugzeugen oder Landfahrzeugen. Ebenfalls braucht das im Speicher 8 gespeicherte Funkstellenverzeichnis nicht nur auf Küstenfunkstellen beschränkt zu sein, sondern kann auch beliebige andere Funkstellen umfassen.

## Patentansprüche

1. Steuergerät für Funkanlagen, insbesondere für den Einsatz im erdgebundenen Seefunkverkehr,
gekennzeichnet durch eine einer Funkanlage (1) vorgeschaltete Steuereinrichtung (12), die aus einem gespeicherten Verzeichnis von Funkstellen und den von diesen benutzten Frequenzen unter Berücksichtigung des eingegebenen geographischen Standortes und der Uhrzeit eine geeignete Frequenz für eine gewünschte Funkverbindung zu einem anzurufenden Teilnehmer ermittelt und die Funkanlage (1) so ansteuert, daß von dieser die gewünschte Funkverbindung mit der ermittelten Frequenz selbsttätig aufgebaut wird.

2. Steuergerät nach Anspruch 1,
dadurch gekennzeichnet, daß die Steuereinrichtung (12) eine geeignete Frequenz für eine im wesentlichen optimale Übertragungsqualität der gewünschten Funkverbindung ermittelt.

3. Steuergerät nach Anspruch 1 oder 2, gekennzeichnet durch eine Uhr (10) zur Ermittlung der
Uhrzeit.

4. Steuergerät nach mindestens einem der Ansprüche 1 bis 3,
dadurch gekennzeichnet, daß die Steuereinrichtung (12) den geographischen Standort der eigenen Funkstelle von einem externen Navigationsgerät (14) empfängt.

5. Steuergerät nach mindestens einem der Ansprüche 1 bis 4,
dadurch gekennzeichnet, daß die Steuereinrichtung (12) die geeignete Frequenz für die gewünschte Funkverbindung zusätzlich unter Berücksichtigung von gespeicherten Sonnenfleckenindexwerten ermittelt.

6. Steuergerät nach mindestens einem der Ansprüche 1 bis 5,
dadurch gekennzeichnet, daß es sich bei dem abgespeicherten Verzeichnis von Funkstellen um ein Verzeichnis von amtlichen Funkstellen, insbesondere Küstenfunkstellen, handelt.

7. Steuergerät nach mindestens einem der Ansprüche 1 bis 6,
dadurch gekennzeichnet, daß das gespeicherte Verzeichnis zusätzlich Angaben zum Signalisiermodus der angegebenen Funkstellen enthält und die Steuereinrichtung (12) unter Berücksichtigung dieser Angaben die Funkanlage (1) über eine Signalisiereinrichtung (4) ansteuert.

8. Steuergerät nach mindestens einem der Ansprüche 1 bis 7,
gekennzeichnet durch eine an die Steuereinrichtung (12) angeschlossene Bedieneinrichtung (16) zur Eingabe des anzurufenden Teilnehmers und zur Aktivierung der Steuereinrichtung (12).

9. Steuergerät nach mindestens einem der Ansprüche 1 bis 8,
gekennzeichnet durch eine an die Steuereinrichtung (12) angeschlossene Anzeigeeinrichtung (24), durch die von der Steuereinrichtung (12) relevante Informationen über die Abwicklung der Funkverbindung angezeigt werden.

10. Steuergerät nach den Ansprüchen 8 und 9,
dadurch gekennzeichnet, daß die Anzeigeeinrichtung (24) in der Bedieneinrichtung (16) enthalten ist.

11. Steuergerät nach den Ansprüchen 8 oder 10,
dadurch gekennzeichnet, daß die Steuereinrichtung (6, 12) und die Bedieneinrichtung (16) mittels Modems über eine Telefonleitung (18) miteinander verbunden sind.

12. Steuergerät nach Anspruch 11,
dadurch gekennzeichnet, daß die Bedieneinrichtung (16) in einem Telefonapparat enthalten ist.

13. Steuergerät nach Anspruch 11 oder 12,
dadurch gekennzeichnet, daß die Eingaben in die Bedieneinrichtung (16) als Tonwahlzeichen über die Telefonleitung (18) an die Steuereinrichtung (12) übertragbar sind.
